# EUROPEAN PATENT APPLICATION

(11) **EP 4 426 002 A1**
(43) Date of publication of application: **04.09.2024**
(21) Application number: 21962508.4
(22) Date of filing: 29.10.2021
(51) Int. Cl.: H04W 28/04

(54) **TERMINAL AND COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); MATSUMURA, Yuki, Tokyo 100-6150 (JP); KURITA, Daisuke, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2021/040158
(87) International publication number: WO 2023/073968

(57) **Abstract**

A terminal includes: a receiving unit configured to receive, from a base station, control information for activating a semi-persistent scheduling physical downlink shared channel (SPS-PDSCH) in a non-terrestrial network (NTN) or a multicast and broadcast service (MBS); a control unit configured to determine a feedback-related operation method that matches the control information, based on a first configuration set by the base station; and a transmitting unit configured to send feedback to the base station when a decision to send the feedback is made.

## Description

### [FIELD OF THE INVENTION]

The present invention relates to a terminal and a communication method in a wireless communication system.

### [BACKGROUND OF THE INVENTION]

In new radio ("NR") (also referred to as "5G"), which is a successor system of long term evolution ("LTE"), technologies to satisfy requirements such as large system capacity, high data transmission rates, low latency, simultaneous connection of many terminals, low cost, and power saving are under study (see, for example, non-patent document 1) .

In addition, non-terrestrial networks (NTNs) are under study at present. NTNs intend to use non-terrestrial networks, formed by satellites and the like, to provide services in areas that cannot be covered by terrestrial 5G networks mainly due to cost issues (see, for example, non-patent document 2 and non-patent document 3).

### [Citation List]

### [Non-Patent Document]

[Non-Patent Document 1] 3GPP TS 38.300 V16.6.0 (2021-06)
[Non-Patent Document 2] 3GPP TR 38.821 V16.0.0 (2019-12)
[Non-Patent Document 3] Konishi et al., "A Study of Downlink Spectrum Sharing in HAPS Mobile Communication Systems," IEICE General Conference, B-17-1, 2020
[Non-Patent Document 4] 3GPP TS 38.214 V16.6.0 (2021-06)

### [SUMMARY OF THE INVENTION]

### [TECHNICAL PROBLEM]

In an NTN environment, there is a substantial distance between a base station up in the sky and a terminal, and so the propagation delay is also substantial compared to a terrestrial network (TN) environment. Also, in the event a low earth orbit (LEO) satellite or a high altitude platform station (HAPS) is used, a situation in which a base station moves might arise. Therefore, there is an ongoing study to support an operation to disable hybrid automatic repeat request (HARQ) feedback in an NTN environment.

Also, an operation to allow only NACK feedback or disable feedback altogether in physical downlink shared channel (PDSCH) transmission in a multicast and broadcast service (MBS) environment is underway.

Even if HARQ feedback is disabled here, for example, feedback that indicates a success or a failure of semi-persistent scheduling (SPS) activation is necessary at the base station.

The present invention has been made in view of the foregoing, and aims to activate semi-persistent scheduling (SPS) appropriately in a wireless communication system.

### [SOLUTION TO PROBLEM]

According to the technique disclosed herein, a terminal is provided. This terminal includes: a receiving unit configured to receive, from a base station, control information for activating a semi-persistent scheduling physical downlink shared channel (SPS-PDSCH) in a non-terrestrial network (NTN) or a multicast and broadcast service (MBS); a control unit configured to determine a feedback-related operation method that matches the control information, based on a first configuration set by the base station; and a transmitting unit configured to send feedback to the base station when a decision to send the feedback is made.

### [ADVANTAGEOUS EFFECTS OF INVENTION]

According to the technique disclosed herein, semi-persistent scheduling (SPS) can be appropriately activated in a wireless communication system.

### [BRIEF DESCRIPTION OF THE DRAWINGS]

[FIG. 1] FIG. 1 is a diagram that illustrates an example (1) of an NTN environment;
[FIG. 2] FIG. 2 is a diagram that illustrates an example (2) of an NTN environment;
[FIG. 3] FIG. 3 is a diagram that illustrates an example (3) of an NTN environment;
[FIG. 4] FIG. 4 is a diagram that illustrates an example (4) of an NTN environment;
[FIG. 5] FIG. 5 is a diagram that illustrates an example of receiving SPS PDSCHs;
[FIG. 6] FIG. 6 is a diagram that illustrates an example of PTM transmission;
[FIG. 7] FIG. 7 is a flowchart that illustrates an example (1) of SPS activation according to an embodiment of the present invention;
[FIG. 8] FIG. 8 is a flowchart that illustrates an example (2) of SPS activation according to an embodiment of the present invention;
[FIG. 9] FIG. 9 is a flowchart that illustrates an example (3) of SPS activation according to an embodiment of the present invention;
[FIG. 10] FIG. 10 is a diagram that illustrates an example functional structure of a base station 10 according to an embodiment of the present invention;
[FIG. 11] FIG. 11 is a diagram that illustrates an example functional structure of a terminal 20 according to an embodiment of the present invention;
[FIG. 12] FIG. 12 is a diagram that illustrates an example hardware structure of a base station 10 or a terminal 20 according to an embodiment of the present invention; and
[FIG. 13] FIG. 13 is a diagram that illustrates an example structure of a vehicle 2001 according to an embodiment of the present invention.

### [DETAILED DESCRIPTION OF THE PREFERRED EMBODIMENT]

Now, an embodiment of the present invention will be described below with reference to the accompanying drawings. Note that the embodiment described below is only an example, and the applicability of the present invention is by no means limited to the following embodiment.

Existing techniques may be used as appropriate to operate the wireless communication system according to the embodiment of the present invention. These existing techniques include, but are not limited to, for example, existing LTE. Also, unless otherwise specified, the term "LTE" as used herein has a broad meaning including LTE-Advanced and systems that emerged after LTE-Advanced (for example, NR).

Also, in the following description of the embodiment of the present invention, terms that are used in existing LTE will be used, including a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), a physical uplink shared channel (PUSCH), and so forth. This is for ease of description, and signals, functions, and so forth that are substantially the same as these may be referred to by other names. Also, in NR, the above terms are NR-SS, NR-PSS, NR-SSS, NR-PBCH, NR-PRACH, NR-PDCCH, NR-PDSCH, NR-PUCCH, NR-PUSCH, and so forth. However, signals used in NR may not always be expressly preceded by the prefix "NR-."

Also, according to the embodiment of the present invention described herein, the duplex scheme may be time division duplex (TDD), frequency division duplex (FDD), or any other scheme (for example, flexible duplex).

Also, according to the embodiment of the present invention, when a radio parameter or the like is "configured," this may mean that a predetermined value is configured in advance ("pre-configured"), or that a radio parameter or the like is indicated from a base station 10 or a terminal 20 and configured.

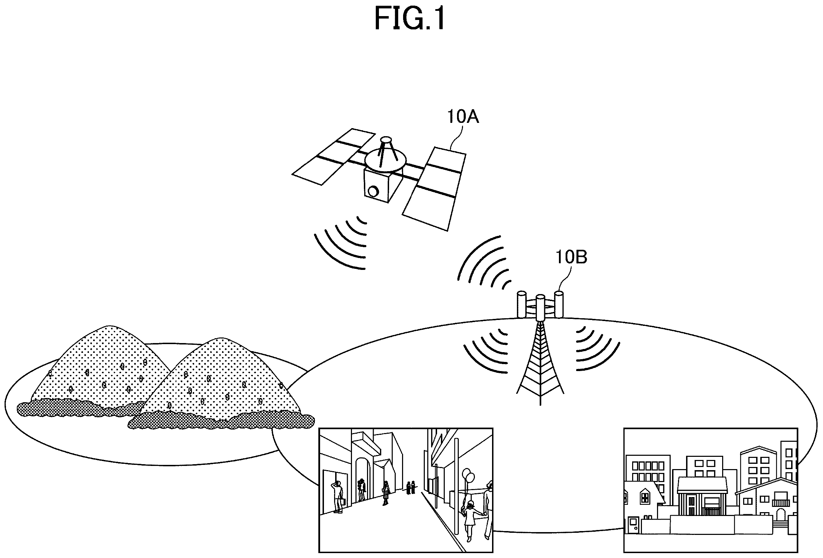

FIG. 1 is a diagram that illustrates an example (1) of an NTN environment. Non-terrestrial networks (NTNs) intend to provide services in areas that cannot be covered by terrestrial 5G networks, mainly due to cost issues, by using non-terrestrial devices such as satellites. NTNs can thus provide more reliable services. For example, NTNs are expected to be applied to the Internet of things (IoT), ships, buses, trains, critical communications, and so forth. Also, efficient multicasting or broadcasting makes NTNs scalable.

Referring to FIG. 1, in an example of an NTN environment, a satellite 10A can retransmit signals transmitted from a ground base station 10B, and provide services in areas where no ground base stations are located, such as in mountainous areas.

Note that a terrestrial 5G network may be structured as follows. A terrestrial 5G network includes one or more base stations 10 and terminals 20. A base station 10 is a communication device that provides one or more cells and performs wireless communication with a terminal 20. Radio signals' physical resources are defined in the time domain and the frequency domain. The time-domain resources may be indicated by the number of orthogonal frequency division multiplexing (OFDM) symbols, and the frequency-domain resources may be indicated by the number of subcarriers or resource blocks. The base station 10 transmits synchronization signals, system information, and so forth to the terminal 20. The synchronization signals include, for example, NR-PSS and NR-SSS. The system information is transmitted, for example, on NR-PBCH, and is also referred to as "broadcast information."

The base station 10 transmits control signals or data to the terminal 20 via downlink (DL), and receives control signals or data from the terminal 20 via uplink (UL). Both the base station 10 and the terminal 20 can transmit and receive signals by employing beamforming. Also, the base station 10 and the terminal 20 can apply multiple input multiple output (MIMO)-based communication to DL or UL. Also, the base station 10 and the terminal 20 may both communicate via a secondary cell (SCell) and a primary cell (PCell) in carrier aggregation (CA).

The terminal 20 is a communication device with a wireless communication function, such as a smartphone, a mobile phone, a tablet, a wearable terminal, or a machine-to-machine (M2M) communication module. The terminal 20 receives control signals or data from the base station 10 via DL, and transmits control signals or data to the base station 10 via UL, thereby using various communication services provided by the wireless communication system.

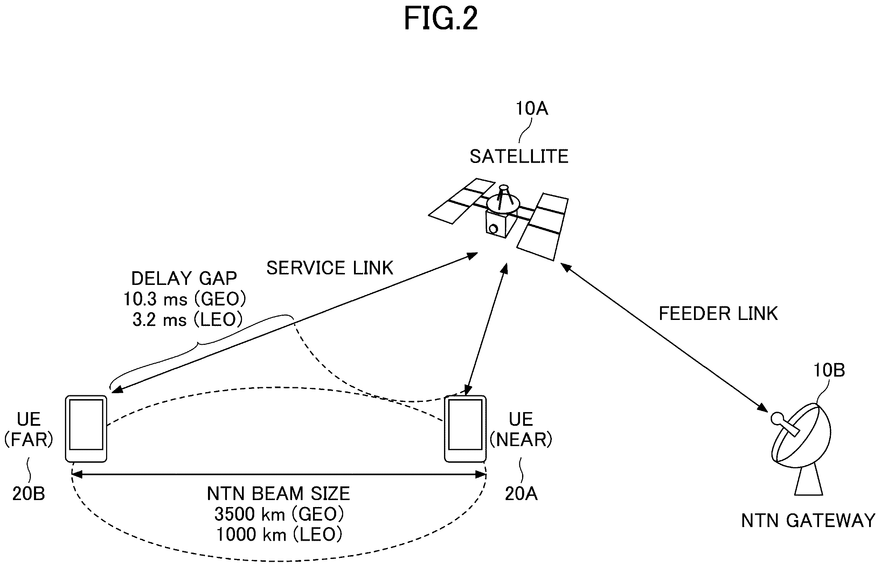

FIG. 2 is a diagram that illustrates an example (2) of an NTN environment. The area that each cell or beam covers in an NTN is very wide compared to a terrestrial network (TN). FIG. 2 shows an example of an NTN formed by satellite-originated retransmissions. The connection between a satellite 10A and an NTN gateway 10B is referred to as a "feeder link," and the connection between the satellite 10A and a UE 20 is referred to as a "service link."

Referring to FIG. 2, the difference in delay between the near-side UE 20A and the far-side UE 20B is, for example, 10.3 ms in the event the satellite 10A is a geosynchronous orbit (GEO) satellite, and 3.2 ms in the event the satellite 10A is a low earth orbit (LEO) satellite. Also, the beam size in the NTN is, for example, 3500 km in the event the satellite 10A is a GEO satellite, and 1000 km in the event the satellite 10A is a LEO satellite.

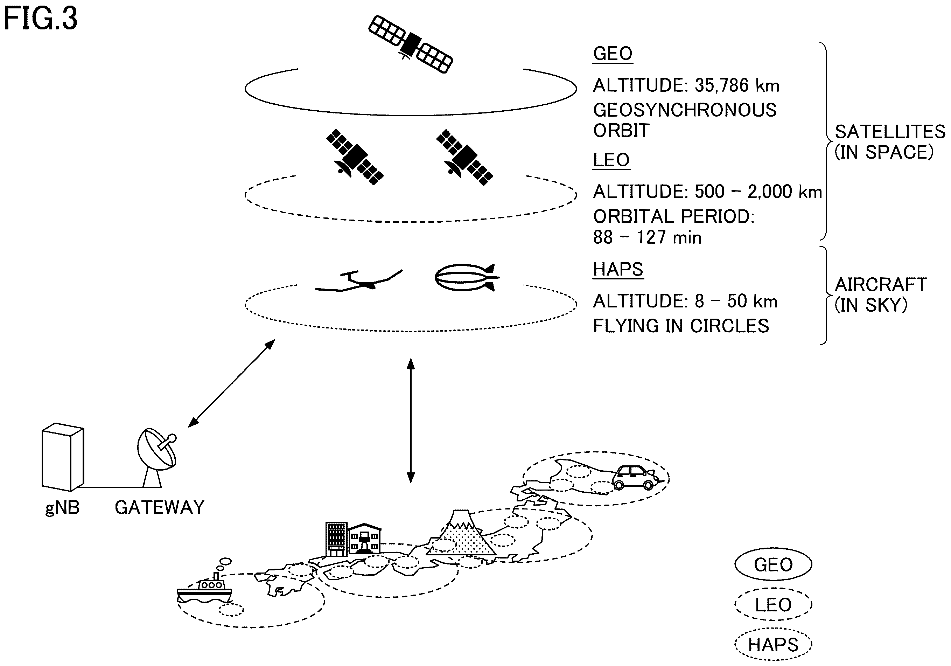

FIG. 3 is a diagram that illustrates an example (3) of an NTN environment. Referring to FIG. 3, an NTN is formed by satellites in space or aircraft in the air. For example, the GEO satellite may be a located at an altitude of 35,786 km and have a geostationary orbit. The LEO satellites may be located at an altitude of 500 to 2000 km and orbit with a period of 88 to 127 minutes. The high altitude platform stations (HAPS) may be located at an altitude of 8 to 50 km and fly in circles.

In FIG. 3, the GEO satellite, LEO satellites, and HAPS aircraft may be connected with a ground station gNB via a gateway. Also, the service area may become larger in the order of the HAPS aircraft, the LEO satellites, and the GEO satellite.

For example, an NTN allows the coverage of a 5G network to be expanded to an area where no service is provided, as well as to area where services are provided. Also, for example, an NTN can improve the continuity, availability, and reliability of services on ships, buses, trains, or other places where critical communications might take place. Note that the use of an NTN may be indicated by sending a dedicated parameter to the terminal 20. The dedicated parameter may be a parameter that relates to determining timing advance (TA) based on information about satellites or aircrafts, for example.

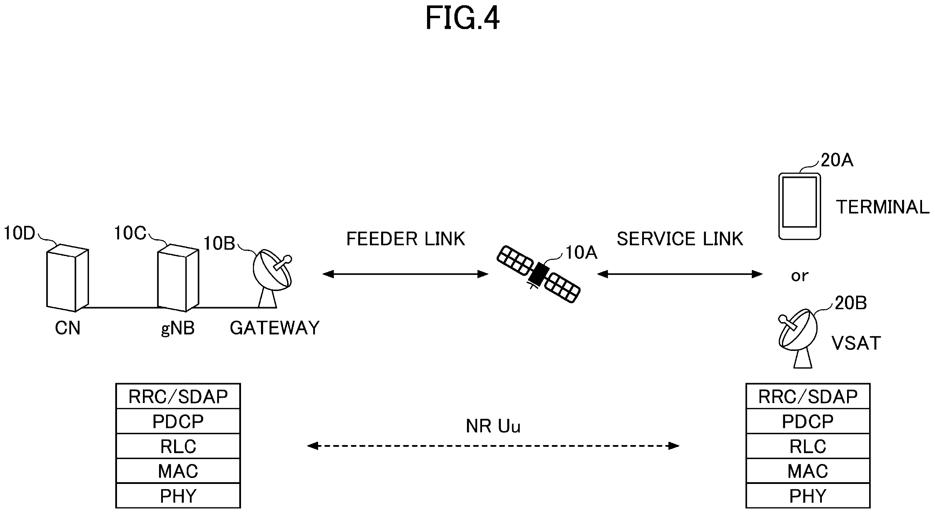

FIG. 4 is a diagram that illustrates an example (4) of an NTN environment. FIG. 4 shows an example of an NTN network architecture that may be used in a transparent payload scenario. As shown in FIG. 4, a core network (CN) 10D, an gNB 10C, and a gateway 10B are connected. The gateway 10B is connected with the satellite 10A via a feeder link. The satellite 10A is connected with the terminal 20A or a very small aperture terminal (VSAT) 20B via a service link. An NR Uu is established between the gNB 10C and the terminal 20A or the VSAT 20B.

Also, FDD may be employed in the NTN network architecture assumed here, or TDD or FDD may be used. The ground cells may be fixed or may move. Also, the terminals 20 may have global navigation satellite system (GNSS) capabilities. For example, in FR1, a power class 3 handheld device may be assumed. Also, a VSAT device may be assumed at least in FR2.

Also, the NTN network architecture may assume regenerative payload. For example, gNB functions may be mounted on a satellite or aircraft. Also, it is possible to mount a gNB-DU on a satellite or an aircraft, and provide a gNB-CU as a ground station.

In NTNs, long propagation delays, the movement of LEO satellites and HAPS, and the fact that communication is carried out via GEO or LEO satellites or HAPS need to be taken into account. Due to such features of NTNs, studies for enhancement of HARQ operation are underway. For example, HARQ feedback may be disabled. When HARQ feedback is disabled, two consecutive DL transport blocks can be sent in one HARQ process without waiting for feedback.

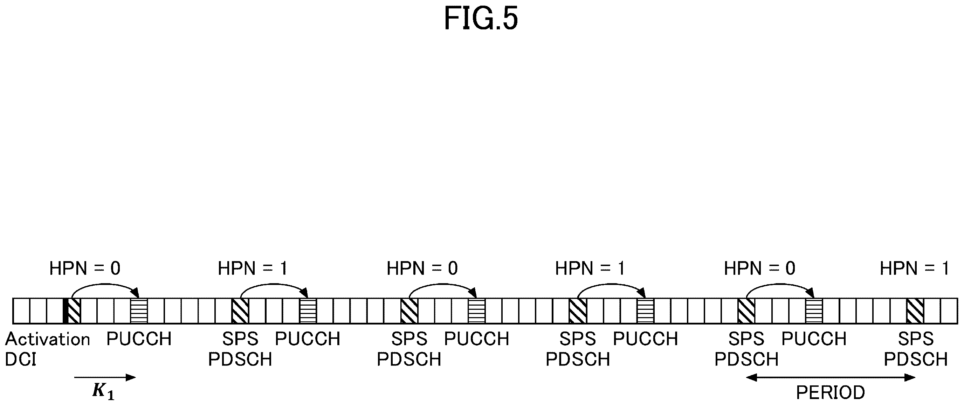

FIG. 5 is a diagram that illustrates an example of receiving SPS PDSCHs. In existing terrestrial networks, semi-persistent scheduling (SPS) such as the one shown in FIG. 5 is supported. FIG. 5 illustrates an example in which the number of HARQ processes is 2, and in which SPS-PDSCHs corresponding to HPN = 0 and HPN = 1 are scheduled alternately. Note that the value "K₁" is the offset from a PDSCH to the PUCCH on which a HARQ-ACK thereto is transmitted. An activation DCI allocates initial PDSCH reception, and indicates the activation of SPS. The HARQ-ACK in response to initial PDSCH reception is used to confirm successful activation of SPS. In SPS-PDSCHs that follow the initial PDSCH, SPS-PDSCHs are transmitted at regular intervals, and no corresponding PDCCH is transmitted.

A release DCI indicates that SPS has been released, and entails no PDSCH allocation. The HARQ-ACK in response to the release DCI is used to confirm successful release of SPS.

The HARQ process number corresponding to each occasion of PDSCH reception is determined based on the slot index and a higher layer parameter that defines the number of HARQ processes assigned in SPS.

For example, the HARQ process ID may be calculated as follows. Below, "CURRENT _slot" is [(SFN × numberOfSlotsPerFrame) + the slot number in the frame], and "numberOfSlotsPerFrame" is the number of consecutive slots per frame. HARQ Process ID = [floor (CURRENT_slot × 10/ (numberOfSlotsPerFrame×periodicity))] modulo nrofHARQ- Processes, or HARQ Process ID = [floor (CURRENT_slot × 10/ (numberOfSlotsPerFrame×periodicity))] modulo nrofHARQ- Processes + harq-ProcID-Offset

Here, whether or not to disable feedback in response to the initial PDSCH corresponding to SPS activation is under study. Note that HARQ feedback in response to release of SPS may be sent constantly, regardless of whether feedback is enabled or disabled.

Reception of an activation command, whether a success or a failure, should be reported to the base station 10. If an activation command fails to be received and this failure is not reported to the base station 10, many subsequent SPS-PDSCHs will not be received by the terminals 20. On the other hand, if feedback is enabled in order to send HARQ feedback in response to the initial SPS-PDSCH, HARQ feedback will be enabled for all the subsequent SPS-PDSCHs.

Furthermore, MBS (Multicast and Broadcast Service) is studied in NR. MBS is under study in order to allow for improved reliability by a group scheduling mechanism, such as reporting of HARQ feedback to the base station 10. MBS may be applied to UEs in RRC_IDLE or RRC_INACTIVE state, in addition to UEs in RRC_CONNECTED state.

A UE in RRC _CONNECTED state may perform a unicast receiving operation and receive MBS at the same time, or improve reliability by sending UL feedback in response to MBS received.

A UE in RRC_IDLE or RRC_INACTIVE state may be able to perform point-to-multipoint (PTM) reception, or may be able to operate as similarly as a UE in RRC _CONNECTED state as possible.

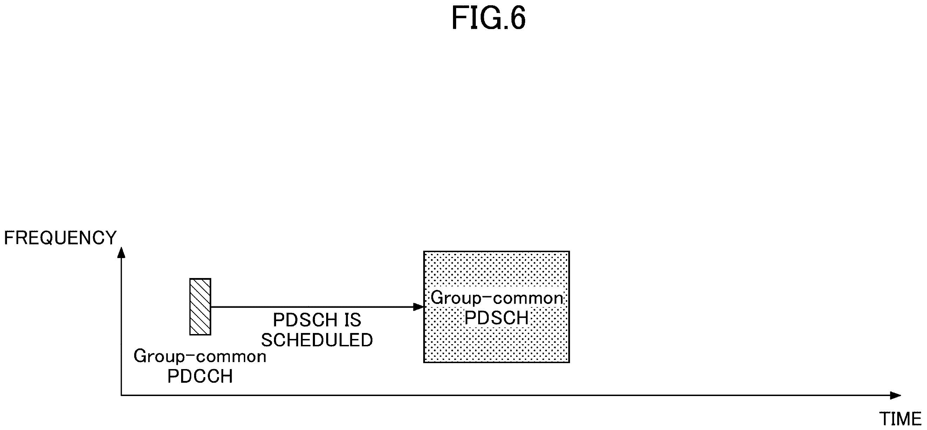

FIG. 6 is a diagram that illustrates an example of PTM transmission. As shown in FIG. 6, a group-common PDSCH is scheduled by a group-common PDCCH. A group-common PDCCH is scheduled for an MBS group of UEs in RRC _CONNECTED state. The cyclic redundancy check (CRC) of the group-common PDCCH and the PDSCH are scrambled by a group-common radio network temporary identifier (RNTI). In PTM transmission, a RAN node delivers a single copy of an MBS data packet to a group of UEs.

Also, point-to-point (PTP) transmission may be supported. In PTP transmission, a RAN node delivers separate copies of an MBS data packet to individual UEs. In PTP transmission, for UEs in RRC_CONNECTED state, UE-specific PDSCHs are scheduled by using UE-specific PDCCHs. The PDCCHs' CRCs and PDSCHs are scrambled by UE-specific RNTIs. That is, MBS packets are sent by unicast transmission.

For HARQ feedback in response to multicast or broadcast PDSCHs, the operations shown below as (1) and (2) may be performed:

(1) ACK/NACK feedback may be supported. A terminal 20 that has successfully received and decoded a multicast or broadcast PDSCH may transmit an ACK. A terminal 20 that has failed to receive and decode a multicast or broadcast PDSCH may transmit a NACK. PUCCH-config may be configurable for multicast. The network may decide whether PUCCH resources are shared or orthogonal between UEs. The HARQ-ACK codebook may support type 1 and type 2. Unicast and multicast may be multiplexed.

(2) NACK feedback alone may be supported. A terminal 20 that has successfully received and decoded a multicast or broadcast PDSCH need not send feedback. A terminal 20 that has failed to receive a multicast or broadcast PDSCH may send a NACK. In a given terminal 20, separate PUCCH resource configurations may be applied to unicast and groupcast. The PUCCH resource configuration may be shared between UEs or may be orthogonal between UEs. PUCCH resources may be shared or separated.

Also, as to whether HARQ feedback in response to multicast or broadcast PDSCHs is enabled or disabled, feedback may be constantly enabled or disabled by RRC signaling, on a per UE basis, or whether feedback is enabled or disabled may be indicated by using a DCI. When a DCI is used to indicate whether feedback is enabled or disabled, a DCI that schedules a group-common PDSCH may indicate whether feedback is enabled or disabled.

Here, whether or not to disable feedback in response to the initial PDSCH, which corresponds to SPS activation, is under study. Reception of an activation command, whether a success or a failure, should be reported to the base station 10. If an activation command fails to be received and the failure is not reported to the base station 10, many subsequent SPS-PDSCHs will not be received by the terminal 20. On the other hand, when feedback is enabled in order to send HARQ feedback in response to the initial SPS-PDSCH, subsequent HARQ feedback will be enabled for all the subsequent SPS-PDSCHs. However, the operation of constantly sending ACK/NACK feedback in response to the initial PDSCH, which corresponds to SPS activation, may not be possible due to a shortage of PUCCH resources.

So, in an NTN and/or MBS, feedback in response to the initial SPS-PDSCH corresponding to SPS activation may be configured as shown in (A) to (C) below. Alternatively, any of (A) to (C) below may be applied without configuration. Note that the configurations of the following (A) to (C) may be applied per HARQ process or per UE. The terminal 20 may receive information that indicates which of the following (A) to (C) is applied, from the base station 10.
(A) HARQ-ACK may be reported regardless of the configuration or indication from the network as to whether HARQ feedback in response to SPS-PDSCHs is enabled or disabled. That is, HARQ-ACK may be reported regardless of whether HARQ feedback in response to SPS-PDSCHs is enabled or disabled after the initial SPS-PDSCH. The terminal 20 may assume that the downlink assignment index (DAI) included in the activation DCI increases.

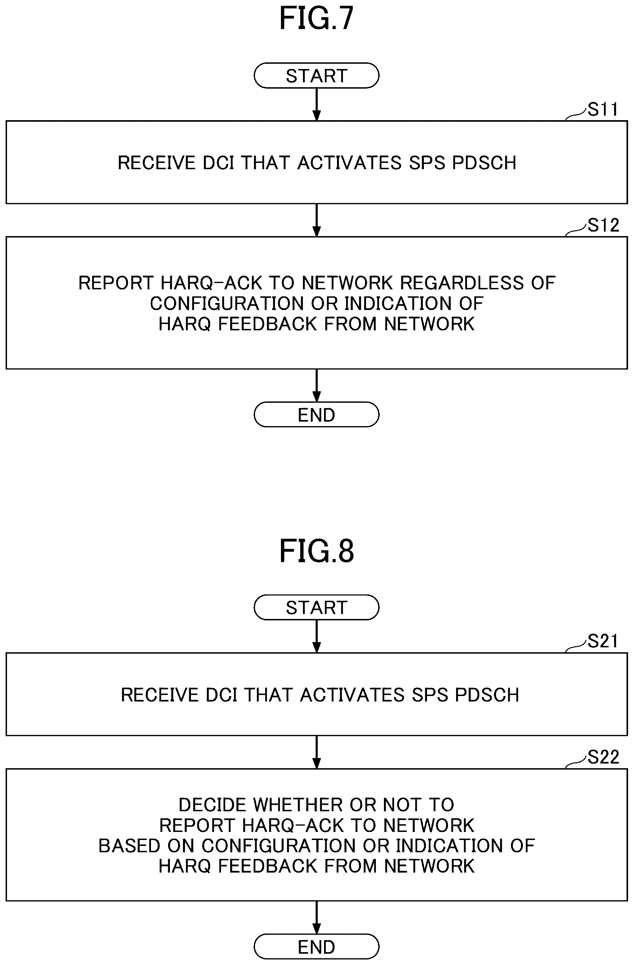

FIG. 7 is a flowchart that illustrates an example (1) of SPS activation according to an embodiment of the present invention. In step S11, the terminal 20 receives a DCI that activates the SPS-PDSCH. In the following step S12, the terminal 20 reports a HARQ-ACK in response to the initial SPS-PDSCH to the network, regardless of the configuration or indication from the network as to whether HARQ feedback is applied to the SPS-PDSCHs after the initial SPS-PDSCH.

(B) HARQ-ACK may be reported based on the configuration or indication from the network as to whether HARQ feedback in response to the initial SPS-PDSCH is enabled or disabled. That is, the terminal 20 may apply the configuration or indication from the network as to whether HARQ feedback is enabled or disabled with respect to the SPS-PDSCHs after the initial SPS-PDSCH, to the HARQ feedback in response to the initial SPS-PDSCH.

FIG. 8 is a flowchart that illustrates an example (2) of SPS activation according to an embodiment of the present invention. In step S21, the terminal 20 receives a DCI that activates the SPS-PDSCH.
In the following step S22, the terminal 20 decides, based on the configuration or indication from the network as to whether or not HARQ feedback is applied to the SPS-PDSCHs after the initial SPS-PDSCH, whether or not to report the HARQ-ACK in response to the initial SPS-PDSCH to the network.

(C) The HARQ feedback in response to the initial SPS-PDSCH may be reported to the network in a different method from HARQ feedback.

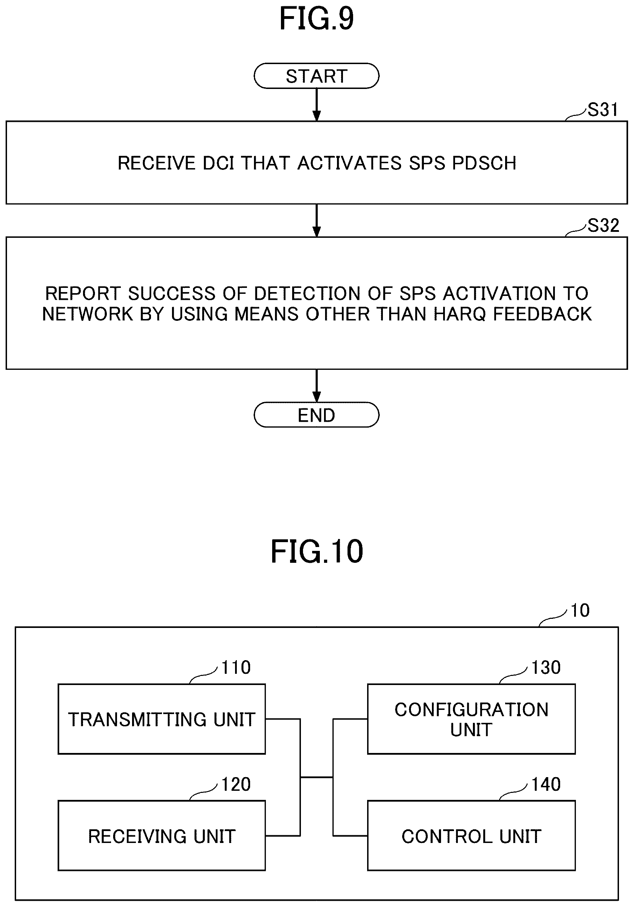

FIG. 9 is a flowchart that illustrates an example (3) of SPS activation according to an embodiment of the present invention. In step S31, the terminal 20 receives an SPS-PDSCH-activating DCI. In the following step S32, the terminal 20 reports an HARQ-ACK in response to the initial SPS-PDSCH, to the network, by a means other than HARQ feedback.

Note that if the activation DCI includes an indication of whether to enable or disable HARQ feedback, the indication may be ignored. That is, the indication is applied to the SPS-PDSCHs after the initial SPS-PDSCH. Note that, if a configuration to indicate whether to enable or disable HARQ feedback is provided for SPS, that configuration may be ignored. That is, this configuration is applied to the SPS-PDSCHs after the initial SPS-PDSCH. Note that the "initial SPS-PDSCH that corresponds to SPS activation" and the above "initial SPS-PDSCH" may be replaced with "SPS activation." Also, "SPS activation" may be replaced with "SPS release."

By performing the above operation, the network can decide whether feedback is required, based on the required level of performance and the amount of PUCCH resources that are available.

Regarding feedback in an NTN and/or MBS, the UE capabilities shown in (1) to (4) below may be reported to the network. The UE capabilities may be defined per HARQ process or per UE.

(1) Whether or not configuring feedback in response to the initial SPS-PDSCH corresponding to SPS activation is supported;
(2) Whether or not the operation shown in (A) above is supported;
(3) Whether or not the operations shown in (B) above is supported; and
(4) Whether or not the operation shown in (C) above is supported.

By defining the above UE capabilities, the network can decide whether or not to make feedback a requirement, based on the operation of the terminal 20. Also, the terminal 20 can choose between simple implementation and improving the reliability of activation without consuming resources in subsequent PUCCH transmissions.

In (C) above, the means for reporting successful detection of SPS activation other than HARQ feedback may be a scheduling request (SR). Also, the means may be a MAC-CE (Medium Access Control - Control Element). For example, a MAC-CE field for indicating confirmation of detection of SPS activation may be defined and indicated to the network. In this MAC-CE field, for example, "0" is a failure and "1" is a success. Also, for example, the MAC-CE may contain no field in which confirmation of detection of SPS activation is detected; instead, when the network receives this MAC-CE, the network may assume that detection of SPS activation has been successfully confirmed. Also, for example, multiple CC, BWP, and/or SPS activation or deactivation (release) values may be indicated in multiple bit fields.

When SPS activation is detected successfully, the terminal 20 may transmit information that indicates successful detection of SPS activation on the next earliest occasion of transmission (for example, an SR or a PUSCH). The next earliest transmission occasion may be determined based on processing time. For example, when activation is received in a slot n, the next earliest transmission occasion may be the earliest transmission occasion in a slot after slot n plus a PUSCH preparation period.

As described above, instead of scheduling a new PUCCH resource for a terminal 20 that has another UL resource, it is possible to report a success of detection of SPS activation by using that another UL resource. That is, the reliability of activation can be improved without consuming resources in subsequent PUCCH transmissions.

Also, in an NTN and/or MBS, confirmation of detection of SPS activation may be requested in a DCI other than an activation DCI, or in a MAC-CE. When the terminal 20 receives this request, the terminal 20 may report the success or failure of detection of SPS activation as described above. The request may be sent to every UE, or sent per HARQ process.

For example, the request may be indicated in a new DCI format, a DCI field, a CRC that scrambles a DCI's RNTI, a search space, a control resource set (CORESET), or a new MAC-CE. The DCI field may be a new field or a combination of existing fields. The DCI format may be an existing DCI format, such as DCI format 1_0, 1_1, or 2_X.

The request may be delivered by way of group-common signaling or UE-specific signaling. The signaling that indicates this request may include information as to which SPS is activated.

An ACK or NACK may be reported in this request. An ACK may indicate that SPS activation was successfully detected, and a NACK may indicate that detection of SPS activation failed.

A NACK alone may be reported in this request. That is, nothing may be sent when SPS activation was successfully detected, and a NACK may be sent when detection of SPS activation failed.

For example, even when the communication environment is not good, the above-described operation still makes it possible to request to the terminal 20 to report the success or failure of SPS activation detection, which leads to an improvement in reliability.

According to the above embodiment, in an NTN environment or an MBS environment, the terminal 20 can control feedback in response to the initial SPS-PDSCH as necessary, thereby improving the reliability of SPS activation.

That is, semi-persistent scheduling (SPS) can be activated appropriately in a wireless communication system.

### (Device Structure)

Next, example functional structures of the base station 10 and terminal 20 that execute the processes and operation described above will be explained. The base station 10 and terminal 20 include functionals for implementing the embodiment described above. However, the base station 10 and the terminal 20 may each have only part of the functions of the embodiment.

### <Base Station 10>

FIG. 10 is a diagram that illustrates an example functional structure of the base station 10 according to the embodiment of the present invention. As shown in FIG. 10, the base station 10 includes a transmitting unit 110, a receiving unit 120, a configuration unit 130, and a control unit 140. The functional structure shown in FIG. 10 is only an example. If the operation according to the embodiment of the present invention can be performed, any functional categories and any functional unit names may be used.

The transmitting unit 110 has a function to generate signals to be transmitted to the terminal 20 side and transmit the signals wirelessly. Also, the transmitting unit 110 transmits inter-network-node messages to other network nodes. The receiving unit 120 has a function to receive various signals transmitted from the terminal 20 and acquire, for example, information pertaining to higher layers from the received signals. Also, the transmitting unit 110 has a function to transmit NR-PSS, NR-SSS, NR-PBCH, DL/UL control signals, and so forth, to the terminal 20. Also, the receiving unit 120 receives inter-network-node messages from other network nodes.

The configuration unit 130 stores configuration information that is configured in advance, and various configuration information to be sent to the terminal 20. The contents of the configuration information include, for example, information related to NTN communication.

The control unit 140 executes control communication in an NTN, as described in the above embodiment. Also, the control unit 140 controls communication between the base station 10 and the terminal 20, based on radio parameter-related UE capabilities reported from the terminal 20. The functional part related to signal transmission in the control unit 140 may be included in the transmitting unit 110, and the functional part related to signal reception in the control unit 140 may be included in the receiving unit 120.

### <Terminal 20>

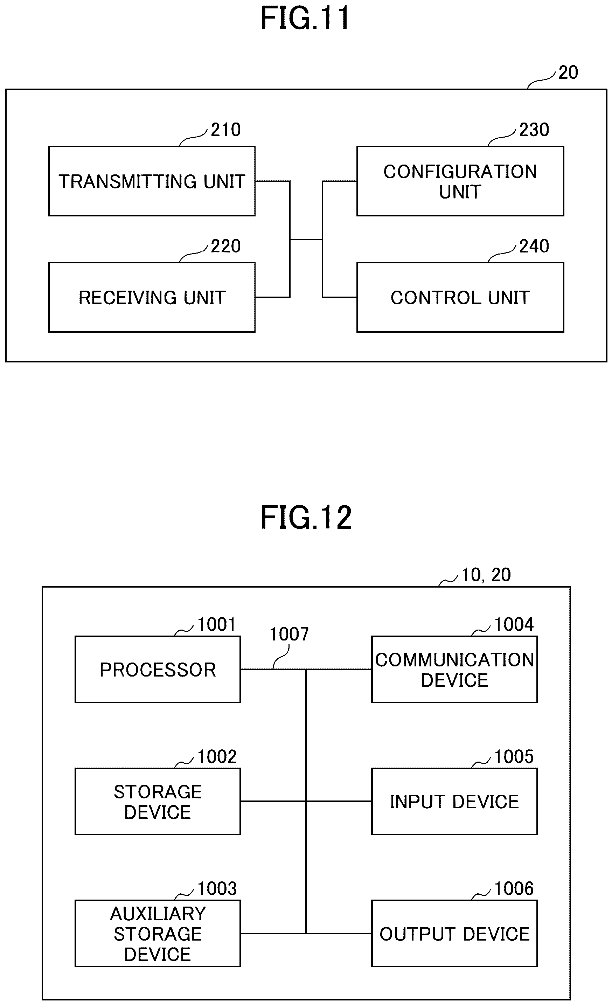

FIG. 11 is a diagram that illustrates an example functional structure of the terminal 20 according to the embodiment of the present invention. As shown in FIG. 11, the terminal 20 includes a transmitting unit 210, a receiving unit 220, a configuration unit 230, and a control unit 240. The functional structure shown in FIG. 11 is only an example. If the operation according to the embodiment of the present invention can be performed, any functional categories and any functional unit names may be used.

The transmitting unit 210 creates transmission signals from transmission data and transmits the transmission signals wirelessly. The receiving unit 220 receives various signals wirelessly, and obtains signals pertaining to higher layers from the physical layer signals received. Also, the receiving unit 220 has a function to receive NR-PSS, NR-SSS, NR-PBCH, DL/UL/SL control signals, and so forth, transmitted from the base station 10. Also, for example, in D2D communication, the transmitting unit 210 transmits a physical sidelink control channel (PSCCH), a physical sidelink shared channel (PSSCH), a physical sidelink discovery channel (PSDCH), a physical sidelink broadcast channel (PSBCH), and so forth, to other terminals 20. The receiving unit 120 in turn receives PSCCHs, PSSCHs, PSDCHs, PSBCHs, and so forth from other terminals 20.

The configuration unit 230 stores various configuration information received in the receiving unit 220 from the base station 10. Also, the configuration unit 230 also stores configuration information that is configured in advance. The contents of the configuration information include, for example, information related to NTN communication.

The control unit 240 performs control with respect to NTN communication, as described in the embodiment. The functional part related to signal transmission in the control unit 240 may be included in the transmitting unit 210, and the functional part related to signal reception in the control unit 240 may be included in the receiving unit 220.

### (Hardware structure)

The block diagrams (FIG. 10 and FIG. 11) used to describe the above embodiment show blocks in functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, assumption, deeming, broadcasting, notifying, communicating, forwarding, configuring, reconfiguring, allocating, mapping, and assigning. For example, a functional block (component) that performs a transmission function is referred to as a "transmitting unit" or a "transmitter." In either case, as mentioned earlier, the method of implementation is not particularly limited.

For example, the base station 10, terminal 20, and so forth according to the embodiment of the present disclosure may function as a computer for processing the wireless communication method of the present disclosure. FIG. 12 is a diagram that illustrates an example hardware structure of the base station 10 and terminal 20 according to the embodiment of the present disclosure. The base station 10 and terminal 20 described above may be physically configured as a computer device including a processor 1001, a storage device 1002, an auxiliary storage device 1003, a communication device 1004, an input device 1005, an output device 1006, a bus 1007, and so forth.

In the following description, the term "device" can be read as circuit, apparatus, unit, and so forth. The hardware structure of the base station 10 and terminal 20 may be configured to include one or more of the devices illustrated in the drawings, or may be configured without some of the devices.

The functions of the base station 10 and terminal 20 are realized by the processor 1001 performing operations by reading predetermined software (programs) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operations described in the above embodiment may be used. For example, the control unit 140 of the base station 10 illustrated in FIG. 10 may be stored in the storage device 1002 and implemented by control programs that operate on the processor 1001. For example, the control unit 240 of the terminal 20 illustrated in FIG. 11 may be stored in the storage device 1002 and implemented by control programs that operate on the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 is a computer-readable recording medium and may be composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 is a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network, and is also referred to as a "network device," a "network controller," a "network card," a "communication module," or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10 and terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented by using at least one of these hardware components.

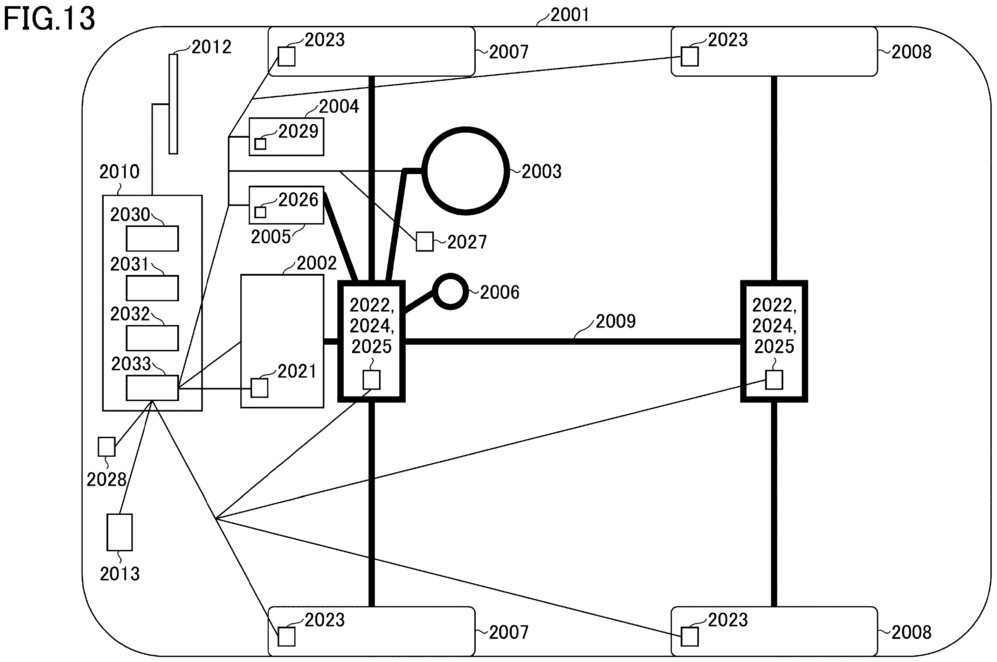

FIG. 13 shows an example structure of a vehicle 2001. As shown in FIG. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The embodiment and examples described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the sensors 2021 to 2029 provided in the vehicle 2001. The electronic control unit 2010 may be referred to as an "electronic control unit" (ECU).

The signals from the sensors 2021 to 2029 include a current signal from a current sensor 2021 that senses the current of the motor, a front or rear wheel rotation speed signal acquired by a rotation speed sensor 2022, a front or rear wheel air pressure signal acquired by an air pressure sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, a shift lever operation signal acquired by a shift lever sensor 2027, and a detection signal, acquired by an object detection sensor 2028, for detecting an obstacle, a vehicle, a pedestrian, and the like.

The information service unit 2012 includes various devices for providing various information such as driving information, traffic information, and entertainment information, including a car navigation system, an audio system, a speaker, a television, and a radio, and one or more ECUs that control these devices. The information service unit 2012 provides various multimedia information and multimedia services to the occupants of the vehicle 2001 by using information obtained from external devices through the communication module 2013 or the like.

A driver assistance system unit 2030 includes: various devices for providing functions of preventing accidents and reducing the driver's burden of driving, such as a millimeter wave radar, a light detection and ranging (LiDAR) system, a camera, a positioning locator (for example, GNSS), map information (for example, high definition (HD) map, autonomous vehicle (AV) map, etc.), a gyro system (for example, an inertial measurement unit (IMU), an inertial navigation system (INS), etc.), an artificial intelligence (AI) chip, and an AI processor; and one or more ECUs that control these devices. In addition, the driver assistance system unit 2030 transmits and receives various information via the communication module 2013 to implement a driver assistance function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM) 2032 in the electronic control unit 2010, and the sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through wireless communication. The communication module 2013 may be internal or external to the electronic control unit 2010. The external devices may include, for example, a base station, a mobile station, or the like.

The communication module 2013 transmits a current signal, which is input to the electronic control unit 2010 from the current sensor, to the external devices through wireless communication. In addition, the communication module 2013 also transmits, to the external devices, through wireless communication, the front or rear wheel rotation speed signal acquired by the rotation speed sensor 2022, the front or rear wheel air pressure signal acquired by the air pressure sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the shift lever operation signal acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various information (traffic information, signal information, inter-vehicle information, etc.) transmitted from the external devices and displays the received information on the information service unit 2012 provided in the vehicle 2001. In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Summary of embodiment)

As described above, according to an embodiment of the present invention, a terminal is provided. This terminal includes: a receiving unit configured to receive, from a base station, control information for activating a semi-persistent scheduling physical downlink shared channel (SPS-PDSCH) in a non-terrestrial network (NTN) or a multicast and broadcast service (MBS); a control unit configured to determine a feedback-related operation method that matches the control information, based on a first configuration set by the base station; and a transmitting unit configured to send feedback to the base station when a decision to send the feedback is made.

Given the above structure, in an NTN environment or an MBS environment, the terminal 20 can control feedback in response to the initial SPS-PDSCH as necessary, thereby improving the reliability of SPS activation. That is, semi-persistent scheduling (SPS) can be properly activated in a wireless communication system.

The control unit may decide, regardless of a second configuration that indicates whether or not to send feedback in response to the SPS-PDSCH, to send the feedback constantly in accordance with the control information. Given the above structure, in an NTN environment or an MBS environment, the terminal 20 can control feedback in response to the initial SPS-PDSCH as necessary, thereby improving the reliability of SPS activation.

The control unit may decide, based on a second configuration that indicates whether or not to send feedback in response to the SPS-PDSCH, whether or not to send the feedback in accordance with the control information. Given the above structure, in an NTN environment or an MBS environment, the terminal 20 can control feedback in response to the initial SPS-PDSCH as necessary, thereby improving the reliability of SPS activation.

The transmitting unit may send the feedback to the base station by using hybrid automatic repeat request (HARQ) feedback, a scheduling request (SR), or a medium access control control element (MAC-CE). Given the above structure, in an NTN environment or an MBS environment, the terminal 20 can control feedback in response to the initial SPS-PDSCH as necessary, thereby improving the reliability of SPS activation.

The receiving unit may receive, from the base station, a signal that requests the feedback. Given the above structure, in an NTN environment or an MBS environment, the terminal 20 can control feedback in response to the initial SPS-PDSCH as necessary, thereby improving the reliability of SPS activation.

Also, according to an embodiment of the present invention, a communication method that is executed by a terminal is provided. This communication method includes: receiving, from a base station, control information for activating a semi-persistent scheduling physical downlink shared channel (SPS-PDSCH) in a non-terrestrial network (NTN) or a multicast and broadcast service (MBS); determining a feedback-related operation method that matches the control information, based on a first configuration set by the base station; and sending feedback to the base station when a decision to send the feedback is made.

In accordance with the above method, in an NTN environment or an MBS environment, a terminal 20 can control feedback in response to the initial SPS-PDSCH as necessary, thereby improving the reliability of SPS activation. That is, semi-persistent scheduling (SPS) can be properly activated in a wireless communication system.

### (Notes on embodiment)

An example embodiment of the present invention has been described above, but the disclosed invention is not limited to the above embodiment, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of multiple functional units may be performed physically by one component, or an operation of one functional unit may be physically performed by multiple parts. In the processing procedures described in the embodiment, the order of the processes may be changed as long as there is no contradiction. For the sake of convenience of processing description, the base station 10 and the terminal 20 are described using functional block diagrams, but such devices may be implemented by hardware, software, or a combination of these. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, notification of information is not limited to the embodiment or examples described in the present disclosure, and may be provided by using any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each embodiment and example described in the present disclosure may be applied to at least one of long-term evolution (LTE), LTE-advanced (LTE-A), SUPER 3G, IMT-Advanced, 4th generation mobile communication system (4G), 5th generation mobile communication system (5G), 6th generation mobile communication system (6G), x-th generation mobile communication system (xG) (where "x" is an integer, decimal, etc.), future radio access (FRA), new radio (NR), new radio access (NX), future generation radio access, W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced, modified, created, and defined based on these standards. Furthermore, multiple systems (for example, a combination of at least one of LTE and LTE-A, with 5G) may be combined to be applied.

The order of the processing procedures, the order of the sequences, the order of the flowcharts, and the like of the embodiment and examples described in this specification may be changed, provided that there is no contradiction. For example, the method described in the present disclosure presents elements of various steps with an example order and is not limited to the presented, specific order.

In this specification, a specific operation to be performed by the base station 10 may be performed by its upper node in some cases. In a network including one or more network nodes including the base station 10, various operations performed for communication with the terminal 20 can be obviously performed by at least one of the base station 10 and any network node (for example, an MME, an S-GW, and so forth, but these are by no means limiting) other than the base station 10. Cases have been shown above in which there is one network node other than the base station 10. The one network node may be a combination of multiple other network nodes (for example, MME and S-GW).

Information, a signal, or the like described in the present disclosure may be output from a higher layer to a lower layer (or from a lower layer to a higher layer). Information, a signal, or the like described in the present disclosure may be input and output via multiple network nodes.

Input and output information and the like may be stored in a specific place (for example, a memory), or may be managed by using a management table. Input and output information and the like may be overwritten, updated, or written on an additional basis. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software," "firmware," "middleware," a "microcode," a "hardware description language," or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of wired technology and radio technology is included in a definition of a transmission medium.

Information, signals, and the like described in the present disclosure may be expressed using any one of a variety of techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency," a "cell," a "frequency carrier," or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, radio resources may be indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term such as a "macrocell," a "small cell," a "femtocell," and a "picocell."

The base station can accommodate one or more (for example, three) cells. In a case in which the base station accommodates multiple cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client," or some other suitable terms.

At least one of the base station and the mobile station may be also referred to as a "transmission device," a "receiving device," a "communication device," or the like. At least one of the base station and the mobile station may be a device installed in a mobile body, a mobile body itself, or the like. The mobile body may be a vehicle (for example, a car, an airplane, etc.), an unmanned body that moves (for example, a drone, an autonomous car or the like), or a robot (manned type or unmanned type). At least one of the base station and the mobile station includes a device that need not move during communication operation. For example, at least one of the base station and the mobile station may be an Internet of things (IoT) device such as a sensor.

Furthermore, the base station in the present disclosure may be replaced by the user terminal. For example, various embodiments and examples of the present disclosure may be applied to a configuration in which communication between the base station and the user terminal is replaced by communication between multiple terminals 20 (such communication may be referred to as "device-to-device (D2D)" communication, "vehicle-to-everything (V2X)" communication, etc.). In this case, the terminals 20 may have and perform the functions that the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," "searching," "inquiring," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

The terms "connected," "coupled," or variations thereof may mean any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as nonlimiting and non-exhaustive examples.

A reference signal may be abbreviated as "RS" and may be referred to as a "pilot," depending on the standard that is applied.

The phrase "based on" used in the present disclosure does not only mean "based only on," unless otherwise stated. In other words, the phrase "based on" means both "based only on" and "based at least on."

Any reference to an element using a designation such as "first" or "second," used in the present disclosure, does not generally restrict quantities or the order of those elements. Such designation can be used in the present disclosure as a convenient method of distinguishing between two or more elements. Thus, reference to the first and second elements does not mean that only two elements can be adopted there or that the first element must precede the second element in a certain way.

Furthermore, "means" in the structure of each of the above devices may be replaced with "unit," "part," "circuit," "device," or the like.

When "include," "including," and variations thereof are used in the present disclosure, these terms are intended to be comprehensive, similar to the term "provided with (comprising)." Furthermore, the term "or" used in the present disclosure is intended not to be an exclusive OR.

A radio frame may include one or more frames in the time domain. In the time domain, each of one or more frames may be referred to as a "subframe." The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot." A mini slot may include fewer symbols than a slot. PDSCH (or PUSCH) that is transmitted in a unit of time greater than a mini slot may be referred to as "PDSCH (or PUSCH) mapping type A." PDSCH (or PUSCH) that is transmitted using a mini slot may be referred to as "PDSCH (or PUSCH) mapping type B."

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a "transmission time interval (TTI)," or a plurality of consecutive subframes may be referred to as a "TTI," or one slot or one mini slot may be referred to as a "TTI." In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot," a "mini slot," or the like, instead of a "subframe."

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a "TTI," one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI," a "long TTI," a "common subframe," a "normal subframe," a "long subframe," a "slot," or the like. A TTI shorter than a common TTI may be referred to as a "reduced TTI," a "short TTI," a "partial TTI" (a partial or fractional TTI), a "reduced subframe," a "short subframe," a "mini slot," a "sub slot," a "slot," or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time range of an RB may include one or more symbols and may have a length of one slot, one mini slot, one subframe, or one TTI. One TTI, one subframe, or the like may be formed with one or more resource blocks.

Furthermore, one or more RBs may be referred to as a "physical resource block (PRB)," a "subcarrier group (SCG)," a "resource element group (REG)," a "PRB pair," an "RB pair," or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). In the terminal 20, one or more BWPs may be configured in one carrier.

At least one of configured BWPs may be active, and the terminal 20 need not assume that predetermined signals/channels are transmitted and received outside an active BWP. Furthermore, a "cell," a "carrier," or the like in the present disclosure may be replaced with a "BWP."

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, "A and B are different" may mean "A and B are different from each other." However, this may also mean "A and B are different from C." Terms such as "separated" or "combined" may be interpreted the same as "different."

Each embodiment or example described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Although the present disclosure has been described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### [DESCRIPTION OF THE REFERENCE NUMERALS]

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a receiving unit configured to receive, from a base station, control information for activating a semi-persistent scheduling physical downlink shared channel (SPS-PDSCH) in a non-terrestrial network (NTN) or a multicast and broadcast service (MBS);
a control unit configured to determine a feedback-related operation method that matches the control information, based on a first configuration set by the base station; and
a transmitting unit configured to send feedback to the base station when a decision to send the feedback is made.

2. The terminal according to claim 1, wherein the control unit is further configured to decide, regardless of a second configuration that indicates whether or not to send feedback in response to the SPS-PDSCH, to send the feedback constantly in accordance with the control information.

3. The terminal according to claim 1, wherein the control unit is further configured to decide, based on a second configuration that indicates whether or not to send feedback in response to the SPS-PDSCH, whether or not to send the feedback in accordance with the control information.

4. The terminal according to claim 1, wherein the transmitting unit is further configured to send the feedback to the base station by using hybrid automatic repeat request (HARQ) feedback, a scheduling request (SR), or a medium access control control element (MAC-CE).

5. The terminal according to claim 1, wherein the receiving unit is further configured to receive, from the base station, a signal that requests the feedback.

6. A communication method executed by a terminal, the communication method comprising:
receiving, from a base station, control information for activating a semi-persistent scheduling physical downlink shared channel (SPS-PDSCH) in a non-terrestrial network (NTN) or a multicast and broadcast service (MBS);
determining a feedback-related operation method that matches the control information, based on a first configuration set by the base station; and
sending feedback to the base station when a decision to send the feedback is made.
